# FASCICULE DE BREVET EUROPEEN

(11) **EP 1 054 597 B1**
(45) Date de publication et mention de la délivrance du brevet: **15.01.2003**
(21) Numéro de dépôt: 99903728.6
(22) Date de dépôt: 10.02.1999
(51) Int. Cl.: A21B 3/13

(54) **MOULE DE CUISSON A VOLUME CONTROLE POUR PRODUITS ALIMENTAIRES**
BACKFORM FÜR NAHRUNGSMITTEL MIT REGELBAREM INHALT
BAKERY PAN WITH CONTROLLED VOLUME FOR FOOD PRODUCTS

(30) Priorité: 12.02.1998 FR 9801929
(43) Date de publication de la demande: 29.11.2000
(73) Titulaire: Dufournet, Marc, 1219 Le Lignon (CH)
(72) Inventeur: Dufournet, Marc, 1219 Le Lignon (CH)
(74) Mandataire: Poncet, Jean-François
(86) Numéro de dépôt international: FR9900283
(87) Numéro de publication internationale: WO99040795

(56) Documents cités:
- FR-A- 2 695 802
- NL-C- 1 003 099

## Description

### DOMAINE TECHNIQUE DE L'INVENTION

La présente invention concerne les moules pour la préparation de produits alimentaires susceptibles de gonfler lors de la cuisson.

Pour donner à un produit alimentaire tel qu'une pâte une forme déterminée à l'issue de sa cuisson, on utilise généralement un moule que l'on remplit partiellement de pâte, de façon que la pâte se développe librement et occupe tout le volume du moule en fin de cuisson.

Le plus couramment, on utilise un moule à orifice supérieur ouvert, de sorte que l'excès éventuel de pâte déborde du moule. Mais la forme finale du produit n'est alors pas entièrement déterminée, car sa face supérieure dépend de la quantité initiale de pâte introduite dans le moule et dépend de la capacité d'expansion de la pâte lors de la cuisson.

Si l'on veut un moulage de toutes les faces de la pâte en fin de cuisson, il faut que le moule soit fermé, et que son volume corresponde aussi exactement que possible au volume total de la pâte en fin de cuisson. Cette condition est difficile à réaliser, car l'expansion de la pâte pendant la cuisson dépend d'un grand nombre de facteurs, notamment des conditions objectives de cuisson telles que la température, mais aussi de la nature de la pâte et des ingrédients qui la composent. Il est alors nécessaire de régler précisément la quantité de pâte que l'on introduit dans le moule.

Si la quantité de pâte est insuffisante pour que, après cuisson, elle parvienne à combler tout le volume du moule, le moulage est incomplet et la forme finale du produit est aléatoire.

Au contraire, si la quantité de pâte est trop importante, l'expansion de la pâte tend à ouvrir le moule, ou à comprimer la matière à l'intérieur du moule, ce qui donne un moulage plus dense dont les qualités gustatives et mécaniques sont affectées.

Le document FR 2 695 802 A décrit divers moules de cuisson à garnissage réglable dans lesquels une paroi périphérique de moule, parallèle à un axe, est ouverte selon un orifice de passage, et se raccorde à un fond fermé, définissant un volume interne ouvert selon l'orifice de passage opposé au fond, et conformé pour contenir et mouler des produits alimentaires tels qu'une pâte pendant leur cuisson. Une paroi intermédiaire mobile coulisse librement et à faible jeu parallèlement à l'axe dans la paroi périphérique vers et à l'écart du fond. Il est prévu des moyens pour tenir temporairement la paroi intermédiaire mobile en une position intermédiaire choisie le long de sa course de coulissement entre le fond et l'orifice de passage. Dans ce document, la paroi intermédiaire mobile est retenue en une position intermédiaire de garnissage par une pièce parallélépipédique faisant office de tige coulissant selon l'axe. Après enlèvement de la tige, la paroi intermédiaire mobile est destinée à coulisser au fur et à mesure du développement de la cuisson.

Une difficulté est que le développement de la pâte dans un tel moule s'effectue de manière relativement aléatoire, non symétrique, et la paroi intermédiaire mobile se coince fréquemment en produisant des défauts de forme de la pâte après moulage.

Une autre difficulté est que, dans le cas d'une pluralité de moules associés côte à côte, il faut prévoir une tige pour chaque moule, l'introduire individuellement dans le moule, puis l'extraire individuellement, ce qui complique considérablement les manipulations.

Egalement, avec un tel dispositif, le garnissage du moule est complexe, car il faut simultanément assurer un maintien de chaque tige dans la position choisie.

Le document NL 1 003 099 A décrit un moule à orifice supérieur ouvert et paroi intermédiaire coulissante. Il n'est pas prévu de moyens pour guider et pour tenir temporairement la paroi intermédiaire en une position intermédiaire. Le moule est posé sur une plaque de cuisson.

### EXPOSE DE L'INVENTION

Le problème proposé par la présente invention est de concevoir une nouvelle structure de moule de cuisson à garnissage réglable, dont le fonctionnement soit fiable et procure un moulage de forme définie sans risque de défaut, et qui facilite le garnissage du moule pendant l'étape initiale de garnissage.

L'invention vise également à faciliter les manipulations du moule pendant les étapes de préparation et de cuisson, ainsi que pendant l'étape de démoulage, en évitant les manipulations individuelles.

Pour atteindre ces objets ainsi que d'autres, un moule de cuisson pour produits alimentaires selon l'invention comprend
- au moins une paroi périphérique tubulaire généralement parallèle à un axe médian, ouverte à une première extrémité selon un orifice de passage, et se raccordant à une seconde extrémité à une base, définissant un élément de moule ayant un volume interne ouvert selon l'orifice de passage opposé à la base et conformé pour contenir et mouler les produits alimentaires pendant leur cuisson,
- une paroi intermédiaire mobile, coulissant librement et à faible jeu parallèlement à l'axe médian dans la paroi périphérique vers et à l'écart de la base selon une course de coulissement, et fermant le volume interne de moulage à l'opposé de l'orifice de passage,
- des moyens pour tenir temporairement la paroi intermédiaire mobile en une position intermédiaire choisie de garnissage le long de sa course de coulissement entre la base et l'orifice de passage,
- une tige de réglage, solidaire de la paroi intermédiaire mobile, coulissant librement et à faible jeu selon l'axe médian dans un passage médian de la base, et de longueur supérieure à la course de coulissement de la paroi intermédiaire mobile, avec une butée d'extrémité s'opposant à sa sortie hors du passage médian en direction de l'orifice de passage,
- une plaque de base, ayant une lumière en correspondance de l'orifice de passage et solidarisée à la face externe de la paroi périphérique,
- des moyens pour tenir temporairement la tige de réglage en une position intermédiaire choisie pendant le garnissage du moule.

Grâce à la tige de réglage, la paroi intermédiaire mobile coulisse de manière fiable dans la paroi périphérique, malgré les déséquilibres aléatoires de poussée de la pâte pendant son expansion due à la cuisson, de sorte que la pâte peut occuper de façon certaine et régulière la totalité du volume du moule en fin de cuisson. En outre, la tenue de la paroi intermédiaire mobile en position de garnissage est efficace, de sorte que l'utilisateur effectue un garnissage correct.

Selon un mode de réalisation avantageux, les moyens pour tenir temporairement la tige de réglage en une position intermédiaire choisie comprennent :
- une plaque d'appui,
- un moyen d'entretoise amovible et interchangeable à insérer autour de la paroi périphérique entre la plaque d'appui et la plaque de base, avec l'extrémité de la tige de réglage venant en appui contre la plaque d'appui, pour maintenir la plaque de base à l'écart de la plaque d'appui selon une distance adaptée pour que la tige de réglage tienne la paroi intermédiaire mobile dans la position intermédiaire choisie de garnissage.

De préférence, le moule comprend en outre une plaque de fermeture rapportée, adaptée pour obturer sélectivement l'orifice de passage, avec des moyens de tenue pour maintenir la plaque de fermeture en appui contre le bord périphérique de l'orifice de passage.

Les moyens d'entretoise peuvent avantageusement comprendre un jeu de cadres tubulaires interchangeables conformés chacun pour entourer la ou les parois périphériques de moule.

L'invention peut s'appliquer à une structure de moule à alvéole unique, comportant un seul volume intérieur.

Toutefois, on peut avantageusement multiplier le nombre d'alvéoles qu'il est possible de garnir simultanément, en prévoyant, solidaires d'une même plaque de base généralement plane à plusieurs lumières, une pluralité de parois périphériques ayant chacune une base et une paroi intermédiaire mobile, les parois intermédiaires mobiles étant associées à des tiges de réglage de même longueur.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une vue en perspective d'une structure de moule selon un mode de réalisation de la présente invention ;
- la figure 2 est une vue en coupe transversale selon le plan A-A de la figure 1, en position de garnissage ;
- la figure 3 est une vue en coupe transversale selon le plan A-A en fin de garnissage, après obturation du moule ;
- la figure 4 est une vue en coupe transversale en position retournée avant cuisson ;
- la figure 5 illustre le moule pendant la cuisson ;
- la figure 6 illustre le moule en fin de cuisson, la pâte occupant tout le volume ; et
- la figure 7 illustre le moule pendant l'opération de démoulage.

### DESCRIPTION DES MODES DE REALISATION PREFERES

Dans le mode de réalisation illustré sur les figures, le moule de cuisson selon l'invention comprend neuf parois périphériques désignées par les références numériques respectives 1 à 9, de mêmes formes tubulaires, ouvertes chacune à une première extrémité selon un orifice de passage et se raccordant à une seconde extrémité à une base respective. Ainsi, la paroi périphérique 1 est généralement parallèle à un axe médian I-I, est ouverte selon l'orifice de passage 10, et comprend une base 11, définissant un élément de moule ayant un volume interne ouvert selon l'orifice de passage 10 opposé à la base 11.

Dans le mode de réalisation illustré sur les figures, la paroi périphérique 1 définit un élément de moule tubulaire de forme parallélépipédique, par exemple de forme cubique, permettant de produire des blocs de pâte cubiques. Une application est de réaliser des choux à la crème de forme cubique, permettant de constituer des pièces montées.

Chaque élément de moule délimité par une paroi périphérique telle que la paroi périphérique 1 inclut une paroi intermédiaire mobile 12, coulissant librement et à faible jeu parallèlement à l'axe médian I-I dans la paroi périphérique 1 vers et à l'écart de la base 11, selon une course de coulissement.

Une tige de réglage 13, solidarisée par sa première extrémité à la paroi intermédiaire mobile 12, coulisse librement et à faible jeu selon l'axe médian I-I dans un passage médian 14 de la base 11. La tige de réglage 13 a une longueur supérieure à la course de coulissement de la paroi intermédiaire mobile 12 dans la paroi périphérique 1, de sorte que la seconde extrémité 15 de la tige de réglage 13 reste en permanence à l'extérieur du moule. Une butée d'extrémité 16 peut être prévue à la seconde extrémité 15 de la tige de réglage 13, pour s'opposer à la sortie de la tige de réglage 13 hors du passage médian 14 en direction de l'orifice de passage 10.

On peut trouver avantage à prévoir des moyens pour favoriser le coulissement de la paroi intermédiaire mobile 12 dans la paroi périphérique 1. Pour cela, on prévoit que le passage médian 14 de la base 11 présente une forme tubulaire et une longueur suffisante pour assurer le guidage longitudinal de la tige de réglage 13. Simultanément, on prévoit que la paroi périphérique 1 présente une dépouille intérieure pour définir un volume de moulage en tronc de pyramide se rétrécissant légèrement en direction de la base 11. Egalement, la base 11 peut être ajourée, par exemple constituée d'une traverse occupant une partie seulement de la section transversale de l'élément de moule. De préférence, on dimensionne la paroi intermédiaire mobile 12 de telle sorte qu'en fin de gonflement de la pâte en cuisson elle vient se coincer dans la paroi périphérique 1 au voisinage de la base 11 en assurant ainsi une étanchéité périphérique s'opposant à l'échappement de la pâte hors de l'élément de moule.

Une plaque de base 17, généralement plane, comporte une pluralité de lumières pour correspondre chacune à l'un des orifices de passage des éléments de moule limités par les parois périphériques respectives 1 à 9. Les lumières prévues dans la plaque de base 17 ont la même forme et la même répartition que les orifices de passage respectifs tels que l'orifice de passage 10 des éléments de moule. Les tiges de réglage telles que la tige de réglage 13 des éléments de moule ont toutes la même longueur.

De préférence, chaque orifice de passage tel que l'orifice 10 est bordé extérieurement d'une nervure périphérique 18, dépassant de la face externe de la plaque de base 17. Cette nervure 18 évite la formation de bavures en périphérie de la dernière face du moulage de pâte.

Dans la réalisation illustrée sur les dessins, la nervure périphérique 18 a une hauteur relativement faible, permettant le remplissage simultané de plusieurs éléments de moule. Toutefois, une certaine quantité de pâte reste alors sur la face externe de la plaque de base 17, et gonfle pendant la cuisson. Il en résulte un risque de fuite hors de l'élément de moule, affectant la forme définitive du bloc de pâte réalisé. Pour éviter ce défaut, on peut trouver avantage à augmenter la hauteur de la nervure périphérique 18, en positionnant la plaque de base 17 à hauteur intermédiaire autour de la paroi périphérique 1.

Selon l'invention, des moyens permettent de tenir temporairement la tige de réglage 13 en une position intermédiaire choisie pour le garnissage du moule.

Dans le mode de réalisation illustré sur les figures, ces moyens pour tenir temporairement la tige de réglage 13 dans la position de garnissage comprennent une plaque d'appui 19, généralement plane, que l'utilisateur peut disposer pour former un appui pour l'ensemble des secondes extrémités 15 des tiges de réglage 13, en adaptant un moyen d'entretoise 20 amovible et interchangeable autour de la paroi périphérique 1 entre la plaque d'appui 19 et la plaque de base 17. Le moyen d'entretoise 20 est amovible et interchangeable, et permet de maintenir la plaque de base 17 à l'écart de la plaque d'appui 19 selon une distance D adaptée pour que la tige de réglage 13 tienne la paroi intermédiaire mobile 12 dans la position intermédiaire choisie pour le garnissage.

Cette position intermédiaire choisie de la paroi intermédiaire mobile 12 est telle que le volume occupé entre la paroi intermédiaire mobile 12 et l'orifice de passage 10 corresponde au volume de pâte adapté pour que la pâte occupe la totalité du volume de l'élément de moule en fin de cuisson.

Ainsi, selon la quantité de pâte nécessaire, l'utilisateur choisit l'un de plusieurs moyens d'entretoise 20 amovibles et interchangeables.

De préférence, le moule selon l'invention comprend en outre une plaque de fermeture 21, illustrée sur les figures 3 à 6, pouvant être généralement plane et de mêmes dimensions que la plaque de base 17. La plaque de fermeture 21 est amovible et adaptée pour obturer sélectivement les orifices de passage tels que l'orifice de passage 10. Des moyens de tenue tels que des pinces latérales 22 permettent de maintenir la plaque de fermeture 21 en appui contre les nervures périphériques 18 bordant les orifices de passage 10.

Les pinces latérales 22 sont amovibles, et adaptées pour s'engager latéralement selon les chants de la plaque de base 17 et de la plaque de fermeture 21 en sollicitant lesdites plaques 17 et 21 l'une vers l'autre.

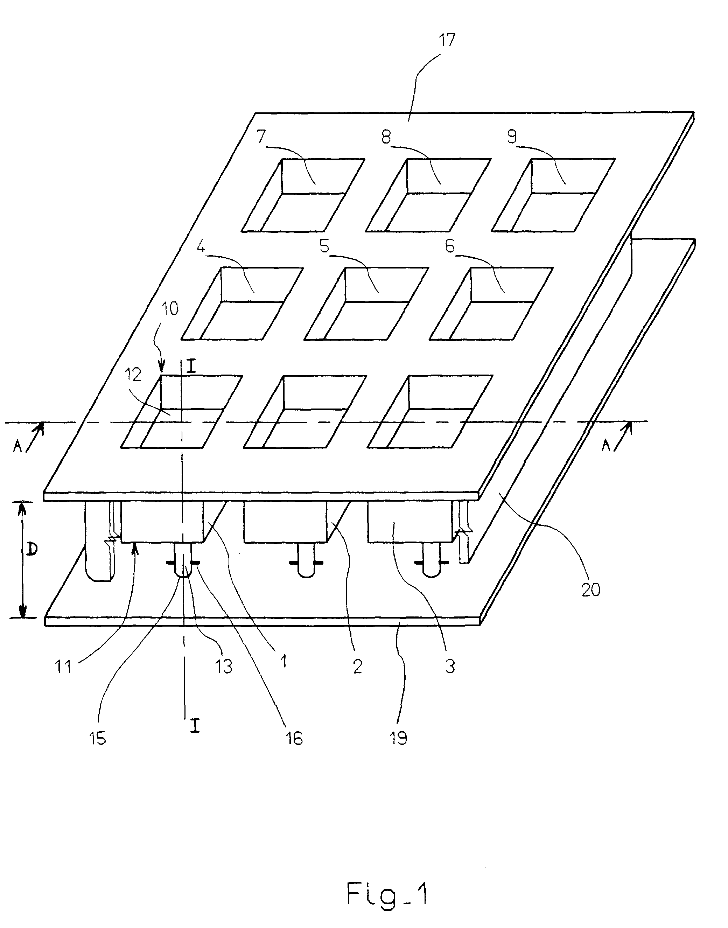

On peut avantageusement prévoir un jeu de plusieurs cadres tubulaires interchangeables, pouvant être fermés ou ouverts, et conformés chacun pour entourer l'ensemble des parois périphériques 1 à 9 des éléments de moule comme représenté sur la figure 1. Chaque cadre tubulaire constitue un moyen d'entretoise 20 différent, ayant une hauteur D distincte.

Selon un autre mode de réalisation de l'invention, les moyens pour tenir temporairement la tige de réglage 13 en une position intermédiaire choisie de garnissage peuvent comprendre une clavette déplaçable le long de la portion externe de la tige de réglage 13 et venant en butée contre la face externe de la base 11 lorsque le moule de cuisson repose sur un plan de travail par la seconde extrémité 15 de la tige de réglage 13.

L'utilisation du moule selon le premier mode de réalisation de l'invention est expliquée en relation avec les figures jointes.

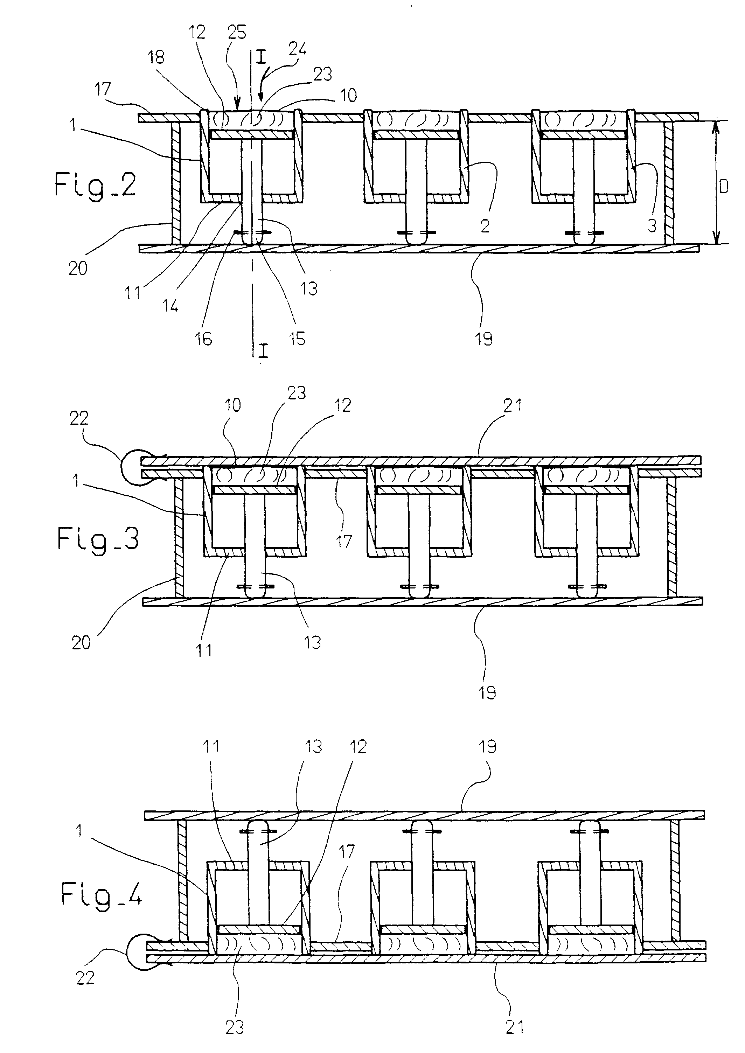

Comme illustré sur les figures 1 et 2, l'utilisateur dispose un moyen d'entretoise 20 sur une plaque d'appui 19, puis dispose la plaque de base 17 sur le moyen d'entretoise 20 en orientant vers le haut les orifices de passage 10. Par l'effet de la gravité, les tiges de guidage 13 viennent chacune en appui par leur seconde extrémité 15 contre la plaque d'appui 19, libérant le volume nécessaire au garnissage de pâte. Dans cette position, l'utilisateur peut introduire la pâte 23 par l'orifice de passage 10 comme illustré par la flèche 24 de la figure 2, par exemple au moyen d'une spatule avec laquelle il égalise la face supérieure 25 de la pâte pour venir au ras de la nervure périphérique 18. La quantité de pâte dans chaque élément de moule est ainsi parfaitement déterminée.

Comme illustré sur la figure 3, l'utilisateur ferme les éléments de moule en adaptant la plaque de fermeture 21, et en la fixant par les pinces latérales 22.

En maintenant à la main la plaque de fermeture 21 et la plaque d'appui 19 repoussées l'une vers l'autre, l'utilisateur peut alors retourner l'ensemble pour l'amener dans la position illustrée sur la figure 4, avec la plaque de fermeture 21 en position inférieure et avec la plaque d'appui 19 en position supérieure. L'utilisateur peut alors retirer la plaque d'appui 19 et le moyen d'entretoise 20, qui ne serviront plus dans les étapes ultérieures de cuisson.

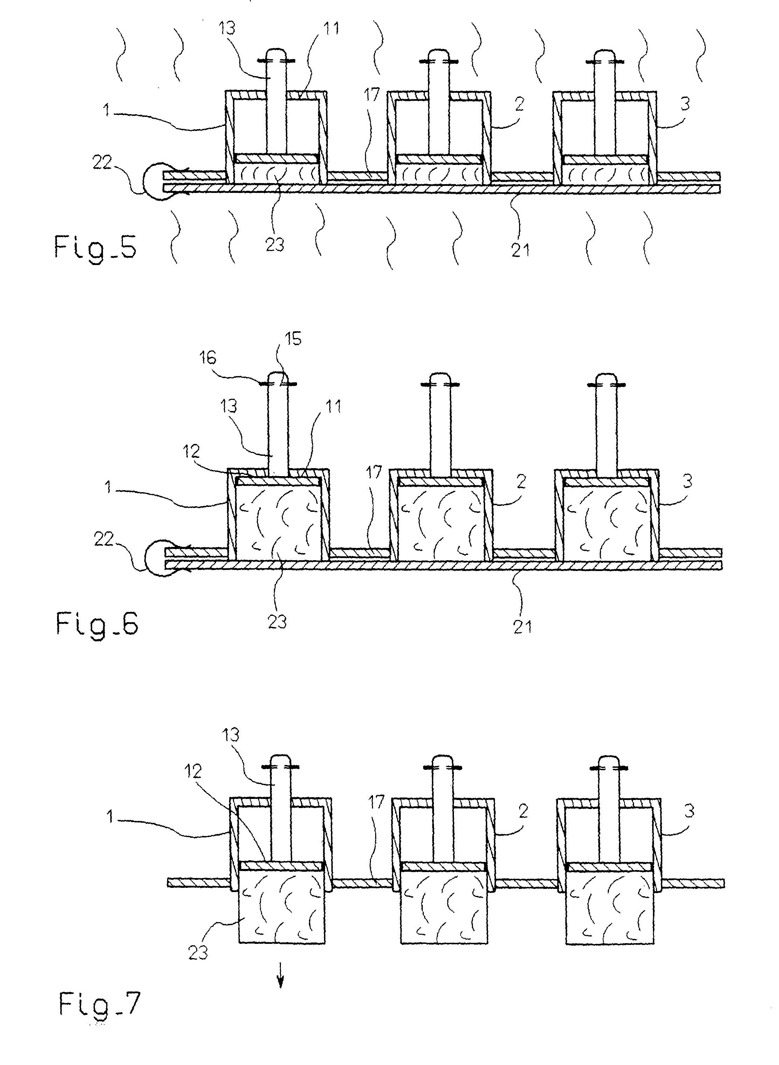

Comme illustré sur la figure 5, l'ensemble formé par la plaque de base 17, les éléments de moule limités par les parois périphériques 1 et les bases 11, et la plaque de fermeture 21, associés par les pinces latérales 22, est placé dans un four ou sur une plaque de cuisson, pendant le temps nécessaire à la cuisson de la pâte 23. Pendant la cuisson, comme illustré sur la figure 6, la pâte 23 se développe et repousse la paroi intermédiaire mobile 12 vers la base 11. En fin de cuisson, la pâte 23 occupe tout le volume intérieur du moule, la paroi intermédiaire mobile 12 étant en appui contre la base 11.

L'utilisateur peut alors retirer l'ensemble à l'écart de la plaque ou du four, puis, après enlèvement des pinces latérales 22 et de la plaque de fermeture 21, l'ensemble formé par la pâte 23, la paroi intermédiaire mobile 12 et la tige de réglage 13 tend à descendre par gravité, libérant le moulage de pâte 23. En alternative, l'utilisateur peut repousser chaque moulage de pâte 23 en poussant la tige de réglage 13.

Le moule est alors prêt pour une nouvelle utilisation.

La présente invention n'est pas limitée aux modes de réalisation qui ont été explicitement décrits, mais elle en inclut les diverses variantes et généralisations contenues dans le domaine des revendications ci-après.

## Revendications

1. Moule de cuisson pour produits alimentaires, comprenant :
- au moins une paroi périphérique (1) tubulaire généralement parallèle à un axe médian (I-I), ouverte à une première extrémité selon un orifice de passage (10), et se raccordant à une seconde extrémité à une base (11), définissant un élément de moule ayant un volume interne ouvert selon l'orifice de passage (10) opposé à la base (11) et conformé pour contenir et mouler les produits alimentaires (23) pendant leur cuisson,
- une paroi intermédiaire mobile (12), capable de coulisser librement et à faible jeu parallèlement à l'axe médian (I-I) dans la paroi périphérique (1) vers et à l'écart de la base (11) selon une course de coulissement, et fermant le volume interne de moulage à l'opposé de l'orifice de passage (10),
- des moyens pour tenir temporairement la paroi intermédiaire mobile (12) en une position intermédiaire choisie de garnissage le long de sa course de coulissement entre la base (11) et l'orifice de passage (10),
- une tige de réglage (13), capable de coulisser librement et à faible jeu selon l'axe médian (I-I) dans un passage médian (14) de la base (11),
**caractérisé en ce que** :
- la tige de réglage (13) est solidaire de la paroi intermédiaire mobile (12), et de longueur supérieure à la course de coulissement de la paroi intermédiaire mobile (12), avec une butée d'extrémité (16) s'opposant à sa sortie hors du passage médian (14) en direction de l'orifice de passage (10),
- il est prévu une plaque de base (17), ayant une lumière en correspondance de l'orifice de passage (10) et solidarisée à la face externe de la paroi périphérique (1),
- il est prévu des moyens (19, 20) pour tenir temporairement la tige de réglage (13) en une position intermédiaire choisie pendant le garnissage du moule.

2. Moule selon la revendication 1, **caractérisé en ce que** les moyens pour tenir temporairement la tige de réglage (13) en une position intermédiaire choisie comprennent :
- une plaque d'appui (19),
- un moyen d'entretoise (20) amovible et interchangeable à insérer autour de la paroi périphérique (1) entre la plaque d'appui (19) et la plaque de base (17), avec l'extrémité (15) de la tige de réglage (13) venant en appui contre la plaque d'appui (19), pour maintenir la plaque de base (17) à l'écart de la plaque d'appui (19) selon une distance (D) adaptée pour que la tige de réglage (13) tienne la paroi intermédiaire mobile (12) dans la position intermédiaire choisie de garnissage.

3. Moule selon la revendication 2, **caractérisé en ce qu'**il comprend en outre une plaque de fermeture (21) rapportée, adaptée pour obturer sélectivement l'orifice de passage (10), avec des moyens de tenue (22) pour maintenir la plaque de fermeture (21) en appui contre le bord périphérique de l'orifice de passage (10).

4. Moule selon la revendication 3, **caractérisé en ce que** les moyens de tenue sont des pinces latérales (22) amovibles adaptées pour s'engager latéralement selon les chants de la plaque de base (17) et de la plaque de fermeture (21) en sollicitant lesdites plaques (17, 21) l'une vers l'autre.

5. Moule selon l'une quelconque des revendications 2 à 4, **caractérisé en ce qu'**il comprend un jeu de plusieurs cadres tubulaires interchangeables conformés chacun pour entourer la ou les parois périphériques (1-9) de moule et constituer un moyen d'entretoise (20).

6. Moule selon la revendication 1, **caractérisé en ce que** les moyens pour tenir temporairement la tige de réglage (13) en une position intermédiaire choisie de garnissage comprennent une clavette déplaçable le long de la portion externe de la tige de réglage (13) et venant en butée contre la face externe de la base (11) lorsque le moule de cuisson repose sur un plan de travail par la seconde extrémité de la tige de réglage (13).

7. Moule selon l'une quelconque des revendications 1 à 6, **caractérisé en ce qu'**il comprend, solidaires d'une même plaque de base (17) généralement plane à plusieurs lumières, une pluralité de parois périphériques (1-9) ayant chacune une base (11) et une paroi intermédiaire mobile (12), les parois intermédiaires mobiles (12) étant associées à des tiges de réglage (13) de même longueur.

8. Moule selon l'une quelconque des revendications 1 à 7, **caractérisé en ce que** chaque orifice de passage (10) est bordé extérieurement d'une nervure périphérique (18) dépassant de la face externe de la plaque de base (17).

9. Moule selon l'une quelconque des revendications 1 à 8, **caractérisé en ce que** :
- le passage médian (14) de la base (11) présente une forme tubulaire et une longueur suffisante pour assurer le guidage longitudinal de la tige de réglage (13),
- la paroi périphérique (1) présente une dépouille intérieure pour définir un volume de moulage en tronc de pyramide se rétrécissant légèrement en direction de la base (11),
- la base (11) est ajourée,
- la paroi intermédiaire mobile (12) est dimensionnée de telle sorte qu'en fin de gonflement de la pâte en cuisson elle vient se coincer dans la paroi périphérique (1) en assurant une étanchéité.

## Claims

1. Bakery pan for food products, including :
- at least one tubular peripheral wall (1) generally parallel to a median axis (I-I), open at a first end at a through-aperture (10), and joined at a second end to a base (11), defining a pan element having an internal volume open at the through-aperture (10) opposite the base (11) and shaped to contain and mould the food products (23) while they are cooking,
- a mobile intermediate wall (12), capable of sliding freely and with a small clearance in the peripheral wall (1) over a sliding stroke in the direction parallel to the median axis (I-I) towards and away from the base (11), and closing the internal molding volume on the side opposite the through-aperture (10),
- means for temporarily holding the mobile intermediate wall (12) in a chosen intermediate filling position along its sliding stroke between the base (11) and the through-aperture (10),
- an adjusting rod (13), capable of sliding freely and with a small clearance in a median passage (14) of the base (11), along the median axis (I-I),
**characterized in that** :
- the adjusting rod (13) is fastened to the mobile intermediate wall (12) and longer than the sliding stroke of the mobile intermediate wall (12), with an end stop (16) preventing it escaping from the median passage (14) in the direction of the through-aperture (10),
- a baseplate (17) is provided, having an opening in corresponding relationship to the through-aperture (10) and fastened to the outside face of the peripheral wall (1),
- means (19, 20) are provided for temporarily holding the adjusting rod (13) in a chosen intermediate position during filling of the pan.

2. Pan according to claim 1, **characterized in that** the means for temporarily holding the adjusting rod (13) in a chosen intermediate position include :
- a support plate (19),
- removable and interchangeable spacer means (20) adapted to be inserted around the peripheral wall (1) between the support plate (19) and the baseplate (17), with the end (15) of the adjusting rod (13) pressed against the support plate (19), to hold the baseplate (17) away from the support plate (19) by a distance (D) such that the adjusting rod (13) holds the mobile intermediate wall (12) in the chosen intermediate filling position.

3. Pan according to claim 2, **characterized in that** it further includes an attached closure plate (21), adapted to close off the through-aperture (10) selectively, with holding means (22) for holding the closure plate (21) pressed against the peripheral edge of the through-aperture (10).

4. Pan according to claim 3, **characterized in that** the holding means are removable lateral clips (22) adapted to engage laterally along the edges of the baseplate (17) and of the closure plate (21), squeezing said plates (17, 21) together.

5. Pan according to any of claims 2 to 4, **characterized in that** it includes a set of interchangeable tubular frames each of which is shaped to surround the peripheral wall(s) (1-9) of the pan and to constitute spacer means (20).

6. Pan according to claim 1, **characterized in that** the means for temporarily holding the adjusting rod (13) in a chosen intermediate filling position include a key movable along the outside portion of the adjusting rod (13) and abutting against the outside face of the base (11) when the second end of the adjusting rod (13) of the bakery pan rests on a worksurface.

7. Pan according to any of claims 1 to 6, **characterized in that** it includes a plurality of peripheral walls (1-9) which are fastened to a common generally plane baseplate (17) with a plurality of openings in it and each of which has a base (11) and a mobile intermediate wall (12), the mobile intermediate walls (12) being associated with adjusting rods (13) of the same length.

8. Pan according to any of claims 1 to 7, **characterized in that** each through-aperture (10) is bordered on the outside by a peripheral rib (18) projecting from the outside face of the baseplate (17).

9. Pan according to any of claims 1 to 8, **characterized in that** :
- the median passage (14) of the base (11) is tubular in shape and long enough to guide the adjusting rod (13) longitudinally,
- the peripheral wall (1) has an inner clearance to define a molding space in the shape of a truncated pyramid decreasing slightly in size in the direction of the base (11),
- the base (11) is apertured,
- the dimensions of the mobile intermediate wall (12) are such that at the end of expansion of the pastry during cooking it is wedged in the peripheral wall (1) to provide a seal.

## Patentansprüche

1. Backform für Nahrungsmittel, umfassend:
- wenigstens eine rohrförmige Umfangswand (1), die im wesentlichen parallel zu einer Mittelachse (I-I) verläuft, an einem ersten Ende über eine Durchtrittsöffnung (10) geöffnet und an einem zweiten Ende mit einer Grundseite (11) verbunden ist, wodurch ein Backelement gebildet wird, das ein an der Durchtrittsöffnung (10), welche der Grundseite (11) gegenüberliegt, offenes Innenvolumen hat und so ausgebildet ist, daß es die Nahrungsmittel (23) während ihres Backvorganges aufnimmt und abformt,
- eine bewegliche Zwischenwand (12), die frei und mit geringem Spiel parallel zur Mittelachse (I-I) innerhalb der Umfangswand (1) in Richtung auf die Grundseite (11) und von dieser weg über einen Verschiebehub beweglich ist und die das innere Formvolumen gegenüber der Durchtrittsöffnung (10) abschließt,
- Mittel, die die bewegliche Zwischenwand (12) vorübergehend in einer gewählten Zwischenstellung für die Befüllung entlang dem Verschiebehub zwischen der Grundseite (11) und der Durchtrittsöffnung (10) halten,
- eine Einstellstange (13), die in einer mittleren Durchgangsöffnung (14) der Grundseite (11) frei und mit geringem Spiel gemäß der Mittelachse (I-I) verschiebbar ist,
**dadurch gekennzeichnet, daß**:
- die Einstellstange (13) fest mit der beweglichen Zwischenwand (12) verbunden ist, eine Länge hat, die größer als der Verschiebehub der beweglichen Zwischenwand (12) ist, und einen Endanschalg (16) aufweist, der ein Herausrutschen der Einstellstange durch die mittlere Durchgangsöffnung (14) in Richtung auf die Durchtrittsöffnung (10) verhindert,
- eine Grundplatte (17) vorgesehen ist, die eine der Durchtrittsöffnung (10) zugeordnete Öffnung hat, die mit der Außenseite der Umfangswand (1) verbunden ist,
- Mittel (19, 20) vorgesehen sind, die die Einstellstange (13) vorübergehend in einer gewählten Zwischenstellung während der Befüllung der Backform halten.

2. Backform nach Anspruch 1, **dadurch gekennzeichnet, daß** die Mittel zum vorübergehenden Halten der Einstellstange (13) in einer gewählten Zwischenstellung umfassen:
- eine Abstützplatte (19),
- einen abnehmbaren und austauschbaren Abstandshalter (20), der zwischen die Abstützplatte (19) und die Grundplatte (17) um die Umfangswand (1) herum einsetzbar ist, wobei das Ende (15) der Einstellstange (13) zur Anlage an der Abstützplatte (19) kommt, um die Grundplatte (17) auf einem solchen Abstand (D) von der Abstützplatte (19) zu halten, daß die Einstellstange (13) die bewegliche Zwischenwand (12) in der gewählten Zwischenstellung zum Befüllen hält.

3. Backform nach Anspruch 2, **dadurch gekennzeichnet, daß** diese außerdem eine aufgesetzte Abdeckplatte (21) aufweist, die dazu dient, die Durchtrittsöffnung (10) wahlweise abzuschließen, wobei Haltemittel (22) vorgesehen sind, um die Abdeckplatte (21) gegen den umlaufenden Rand der Durchtrittsöffnung (10) zu drücken.

4. Backform nach Anspruch 3, **dadurch gekennzeichnet, daß** die Haltemittel aus abnehmbaren, seitlichen Klemmen (22) bestehen, die so ausgebildet sind, daß sie die Kanten der Grundplatte (17) und der Abdeckplatte (21) seitlich übergreifen und dabei die besagten Platten (17, 21) gegeneinander drücken.

5. Backform nach einem der Ansprüche 2 bis 4, **dadurch gekennzeichnet, daß** sie einen Satz mehrerer, rohrförmiger, austauschbarer Rahmen hat, von denen jeder so ausgebildet ist, daß er die Backform-Umfangswand oder die Backform-Umfangswände (1-9) einschließt und einen Abstandshalter (20) bildet.

6. Backform nach Anspruch 1, **dadurch gekennzeichnet, daß** die Mittel zum vorübergehenden Halten der Einstellstange (13) in einer gewählten Zwischenstellung zum Befüllen eine Schließe aufweisen, die am äußeren Abschnitt der Einstellstange (13) verschiebbar ist und an der Außenseite der Grundseite (11) zur Anlage kommt, wenn die Backform über das zweite Ende der Einstellstange (13) auf einer Arbeitsebene ruht.

7. Backform nach einem der Ansprüche 1 bis 6, **dadurch gekennzeichnet, daß** diese eine Mehrzahl von Umfangswänden (1-9) aufweist, die fest mit ein und derselben Grundplatte (17) verbunden sind, die im wesentlichen eben ist und mehrere Öffnungen aufweist, wobei jede Umfangswand eine Grundseite (11) und eine bewegliche Zwischenwand (12) hat und die beweglichen Zwischenwände (12) mit Einstellstangen (13) gleicher Länge verbunden sind.

8. Backform nach einem der Ansprüche 1 bis 7, **dadurch gekennzeichnet, daß** jede Durchtrittsöffnung (10) außen durch einen umlaufenden Bund (18) begrenzt ist, der über die Grundplatte (17) nach außen vorsteht.

9. Backform nach einem der Ansprüche 1 bis 8, **dadurch gekennzeichnet, daß**:
- die mittlere Durchgangsöffnung (14) der Grundseite (11) rohrförmig ist und eine ausreichende Länge aufweist, um die Längsführung der Einstellstange (13) zu gewährleisten,
- die Umfangswand (1) eine innere Schräge hat, wodurch ein pyramidenstumpfförmiges Formvolumen gebildet wird, das sich in Richtung auf die Grundseite (11) leicht verengt,
- die Grundseite (11) gelocht ist,
- die bewegliche Zwischenwand (12) so dimensioniert ist, daß sie sich am Ende des Aufquellens des Teiges während des Backens in der Umfangswand (1) verklemmt und dadurch eine Dichtwirkung gewährleistet.
